# EUROPÄISCHE PATENTSCHRIFT

(11) **EP 1 123 348 B1**
(45) Veröffentlichungstag und Bekanntmachung des Hinweises auf die Patenterteilung: **28.12.2005**
(21) Anmeldenummer: 99948868.7
(22) Anmeldetag: 25.09.1999
(51) Int. Cl.: C08L 63/00, C08G 59/00, C09J 163/00

(54) **SCHLAGFESTE EPOXIDHARZ-ZUSAMMENSETZUNGEN**
IMPACT-RESISTANT EPOXIDE RESIN COMPOSITIONS
COMPOSITIONS A BASE DE RESINE EPOXYDE ANTI-CHOCS

(30) Priorität: 06.10.1998 DE 19845607
(43) Veröffentlichungstag der Anmeldung: 16.08.2001
(73) Patentinhaber: Henkel Teroson GmbH, 69123 Heidelberg (DE)
(72) Erfinder: SCHENKEL, Hubert, D-69207 Sandhausen (DE)
(74) Vertreter: Scheffler, Ingolf
(86) Internationale Anmeldenummer: PCT/EP1999/007143
(87) Internationale Veröffentlichungsnummer: WO 2000/020483

(56) Entgegenhaltungen:
- EP-A- 0 258 556
- EP-A- 0 309 190
- EP-A- 0 379 468
- US-A- 5 686 509
- JP2129266 A 19900517 from PAJ XP002128787

## Beschreibung

Die vorliegende Erfindung betrifft Gemische aus speziellen Copolymeren mit mindestens einer Glasübergangstemperatur von -30°C oder niedriger und phenolterminierten Polyamiden bzw. Polyimiden, Gemische dieser Komponenten mit Epoxidharzen und/oder Addukten von Epoxidharzen an das Copolymere mit niedriger Glasübergangstemperatur und/oder das Polyamid oder das Polyimid sowie thermisch aktivierbare latente Härter für die Harzkomponenten, sowie gegebenenfalls Beschleuniger, Füllstoffe, Thixotropier-Hilfsmittel und weitere übliche Zusatzstoffe. Die Erfindung betrifft ferner ein Verfahren zur Herstellung dieser Zusammensetzungen sowie zu deren Verwendung als reaktiven Klebstoff.

Reaktive Schmelzklebstoffe auf Epoxidbasis sind bekannt. Im Maschinen-, Fahrzeug- oder Gerätebau, insbesondere im Flugzeugbau, Schienenfahrzeugbau oder Kraftfahrzeugbau werden die Bauteile aus den verschiedenen metallischen Komponenten und/oder Verbundwerkstoffen in zunehmendem Maße mit Hilfe von Klebstoffen gefügt. Für strukturelle Verklebungen mit hohen Anforderungen an die Festigkeit werden in großem Umfang Epoxidklebstoffe eingesetzt, insbesondere als heißhärtende, einkomponentige Klebstoffe, die häufig auch als reaktive Schmelzklebstoffe formuliert werden. Reaktive Schmelzklebstoffe sind dabei Klebstoffe, die bei Raumtemperatur fest sind und bei Temperaturen bis zu etwa 80 bis 90°C erweichen und sich wie ein thermoplastisches Material verhalten. Erst bei höheren Temperaturen ab etwa 100°C werden die in diesen Schmelzklebstoffen vorhandenen latenten Härter thermisch aktiviert, so daß eine irreversible Aushärtung zu einem Duroplasten erfolgt. Zum Fügen der Bauteile, z. B. in der Fahrzeugindustrie, wird der Klebstoff zunächst warm auf mindestens eine Substratoberfläche aufgebracht, die zu verbindenden Bauteile werden dann gefügt. Beim Abkühlen erstarrt der Klebstoff dann und schafft durch dieses physikalische Erstarren eine ausreichende Handhabungsfestigkeit, d. h. eine vorläufige Verbindung. Die so miteinander verbundenen Bauteile werden in den verschiedenen Wasch-, Phosphatier- und Tauchlack-Bädern weiter behandelt. Erst anschließend wird der Klebstoff in einem Ofen bei höheren Temperaturen gehärtet.

Konventionelle Klebstoffe und Schmelzklebstoffe auf Basis von Epoxidharzen sind in ausgehärtetem Zustand hart und spröde. Die mit Ihnen erhaltenen Klebungen weisen zwar in aller Regel eine sehr hohe Zugscherfestigkeit auf. Bei schälender, schlagender oder schlagschälender Beanspruchung, insbesondere bei tieferen Temperaturen platzen diese jedoch ab, so daß es bei dieser Beanspruchungsart der Klebefuge leicht zum Bindungsverlust kommt. Es hat daher bereits zahlreiche Vorschläge gegeben, Epoxidharze durch flexible Zusätze so zu modifizieren, daß ihre Sprödigkeit deutlich reduziert wird. Ein gängiges Verfahren beruht auf der Verwendung spezieller Kautschukaddukte an Epoxidharze, die als heterodisperse Phase in der Epoxidharzmatrix eingelagert sind, so daß die Epoxide schlagfester werden, diese Epoxidharz-Zusammensetzungen werden auch als "Toughened" bezeichnet. Eine gängige, bekannte Modifizierung von Epoxidharzen der vorgenannten Art besteht in der Umsetzung eines Polybutadien-Co-Acrylnitrilcopolymers mit Carboxyl-Endgruppen mit einem Epoxidharz. Dieses Kautschuk-Epoxidaddukt wird dann in einem oder mehreren unterschiedlichen Epoxidharzen eindispergiert. Dabei muß die Reaktion des Epoxidharzes mit dem carboxylgruppenhaltigen Butadien-Acrylnitrilkautschuk so geführt werden, daß es nicht zu einer vorzeitigen Aushärtung des Adduktes führt. Obwohl derartig modifizierte Epoxidharz-Zusammensetzungen in bezug auf ihre Schlagfestigkeit bereits eine deutliche Verbesserung gegenüber den unmodifizierten Epoxidharzen darstellen, ist ihr Verhalten gegenüber schälenden bzw. schlagschälenden Beanspruchungen immer noch nicht ausreichend.

Aus der EP-A-0 343 676 sind Schmelzklebstoffzusammensetzungen bekannt, die aus einem Gemisch von mehreren Epoxidharzen, einem phenolischen Harz sowie einem Polyurethan-Epoxidaddukt zusammengesetzt sind. Das darin enthaltene Polyurethan-Epoxidaddukt besteht aus einem Umsetzungsprodukt von mehreren Polyalkylenglykolhomo- und Copolymeren mit primären und sekundären OH-Gruppen, einem Diisocyanat und mindestens einem Epoxidharz. Es wird angegeben, daß diese Schmelzklebstoffzusammensetzung gegenüber verschiedenen, kommerziellen einkomponentigen Schmelzklebstoffzusammensetzungen in ihrer Scherfestigkeit, Schälfestigkeit und Schlagfestigkeit verbessert sind, über die Klebstoffeigenschaften der ausgehärteten Klebefuge bei tiefen Temperaturen werden keine Angaben gemacht.

Die US-A-5 290 857 beschreibt eine Epoxidharzklebstoffzusammensetzung enthaltend ein Epoxidharz sowie ein pulverförmiges Kern/Schalepolymer und einen wärmeaktivierbaren Härter für das Epoxidharz. Das pulverförmige Kern/Schalepolymer ist zusammengesetzt aus einem Kern enthaltend ein Acrylat- oder Methacrylatpolymer mit einer Glasübergangstemperatur von -30°C oder niedriger und einer Schale enthaltend ein Acrylat- oder Methacrylatpolymer, das vernetzende Monomereinheiten enthält und dessen Glasübergangstemperatur größer oder gleich 70°C ist, wobei das Gewichtsverhältnis des Kerns zur Schale im Bereich zwischen 10:1 bis 1:4 liegt. Es wird angegeben, daß diese Zusammensetzungen ausgezeichnete Klebstoffeigenschaften wie Schlagfestigkeit, Zugscherfestigkeit und T-Schälfestigkeit haben und außerdem eine gute partielle Gelierbarkeit besitzen. Angaben über die Eigenschaften von Verklebungen mit diesen Klebstoffen bei tiefen Temperaturen werden nicht gemacht.

In analoger Weise beschreibt die US-A-5 686 509 eine adhäsionsverstärkende Zusammensetzung für Epoxidharze bestehend aus pulverförmigen Copolymerteilchen, die ionisch mit einem mono- oder divalenten Metallkation vernetzt sind. Dabei ist der Kernbereich des Kern/Schalepolymers aus einem Dienmonomer und gegebenenfalls vernetzenden Monomereinheiten zusammengesetzt, der eine Glasübergangstemperatur kleiner oder gleich -30°C hat. Das Schalencopolymer hat eine Glasübergangstemperatur von mindestens 70°C und ist aus Acrylat oder Methacrylatmonomereinheiten und radikalisch polymerisierbare ungesättigte Carbonsäureeinheiten zusammengesetzt. Die Klebstoffzusammensetzung soll dabei auf 100 Teile Epoxidharz 15 bis 60 Gewichtsteile des adhäsionsverstärkenden Copolymerpulvers und 3 bis 30 Gewichtsteile eines hitzeaktivierbaren Härtungsagenz haben. Diese Zusammensetzungen werden zur Anwendung als Strukturklebstoffe für Automobilteile empfohlen. Angaben über die Tieftemperatureigenschaften derartiger Verklebungen werden nicht gemacht.

Aus der EP-A-0 308 664 sind Epoxidharz-Zusammensetzungen bekannt, die ein Epoxid-Addukt eines carboxylgruppenhaltigen Copolymeren auf Basis von Butadien-Acrylnitril oder ähnlichen Butadiencopolymeren enthalten sowie ein Umsetzungsprodukt eines in Epoxidharzen löslichen oder dispergierbaren elastomeren Prepolymeren mit endständigen lsocyanatgruppen mit einem Polyphenol oder Aminophenol sowie nachfolgender Umsetzung dieses Adduktes mit einem Epoxidharz. Weiterhin können diese Zusammensetzungen ein oder mehrere Epoxidharze enthalten. Fernerhin werden zur Härtung für diese Zusammensetzungen aminofunktionelle Härter, Polyaminoamide, Polyphenole, Polycarbonsäuren und ihre Anhydride oder katalytische Härtungsmittel und gegebenenfalls Beschleuniger vorgeschlagen. Es wird angegeben, daß diese Zusammensetzungen sich als Klebstoffe eignen, die je nach konkreter Zusammensetzung hohe Festigkeit, hohe Glasübergangstemperatur, hohe Schälfestigkeit, hohe Schlagzähigkeit oder hohe Rißfortpflanzungsbeständigkeit haben können.

In analoger Weise beschreibt die EP-A-0 353 190 Epoxidharz-Zusammensetzungen enthaltend ein Addukt aus einem Epoxidharz und einem carboxylierten Butadien-Acrylnitrilcopolymeren sowie ein Umsetzungsprodukt eines hydroxyl-, mercapto- oder aminoterminierten Polyalkylenglycols mit einer Phenolcarbonsäure mit nachfolgender Umsetzung der phenolischen Gruppe mit einem Epoxidharz vor. Der EP-A-0 353 190 ist zu entnehmen, daß diese Zusammensetzungen sich zur Herstellung von Klebstoffen, Klebefilmen, Patches, Dichtungsmassen, Lacken oder Matrixharzen eignet.

Gemäß der Lehre der EP-A-0 354 498 bzw. EP-A-0 591 307 lassen sich reaktive Schmelzklebstoffzusammensetzungen aus einer Harzkomponente, mindestens einem thermisch aktivierbaren latenten Härter für die Harzkomponente sowie gegebenenfalls Beschleuniger, Füllstoffe, Thixotropierhilfsmittel und weiteren üblichen Zusätzen herstellen, wobei die Harzkomponente durch die Umsetzung von einem bei Raumtemperatur festen Epoxidharz und einem bei Raumtemperatur flüssigen Epoxidharz mit einem oder mehreren linearen oder verzweigten Polyoxypropylen mit Amino-Endgruppen erhältlich sind. Dabei sollen die Epoxidharze in einer solchen Menge, bezogen auf das Amino-terminierte Polyoxypropylen, eingesetzt werden, daß ein Überschuß an Epoxidgruppen bezogen auf die Aminogruppen gewährleistet ist. Diese Klebstoffzusammensetzungen weisen bereits einen hohen Schälwiderstand im Winkelschälversuch auf, der auch bei tiefen Temperaturen erhalten bleibt.

Aufgabe der vorliegenden Erfindung ist es, reaktive Klebstoffe der eingangs genannten Art dahingehend weiter zu verbessern, daß sie eine ausreichende Flexibilität aufweisen, eine erhöhte Schälfestigkeit nicht nur bei Raumtemperatur sondern insbesondere auch bei tiefen Temperaturen unter 0°C aufweisen. Insbesondere soll die Schälfestigkeit bei tiefen Temperaturen und schlagartiger Belastung einen möglichst hohen Wert aufweisen, damit strukturell geklebte Bauteile auch im Falle eines Unfalls (Crash-Verhalten) den modernen Sicherheitsanforderungen im Fahrzeugbau entsprechen. Dabei sollen diese Verbesserungen ohne Beeinträchtigung der Schälfestigkeit bei hohen Temperaturen sowie der Zugscherfestigkeit erzielt werden. Die reaktiven Klebstoffe müssen darüber hinaus unmittelbar nach der Applikation und vor dem endgültigen Aushärten eine ausreichende Auswaschbeständigkeit haben. Dazu müssen die Klebstoff-Zusammensetzungen als Schmelzklebstoff, als hochviskoser, warm zu verarbeitender Klebstoff formulierbar sein. Eine andere Möglichkeit ist die Formulierung als Klebstoff, der durch eine thermische Vorreaktion im sogenannten "Rohbau-Ofen" oder durch Induktionsheizung der Fügeteile geliert werden kann.

Die erfindungsgemäße Lösung der Aufgabe ist den Ansprüchen zu entnehmen. Sie besteht im wesentlichen in der Bereitstellung von Zusammensetzungen, die
A) ein Copolymeres mit mindestens einer Glasübergangstemperatur von -30°C oder niedriger und gegenüber Epoxiden reaktiven Gruppen sowie
B) ein Reaktionsprodukt aus einem Di- oder Polyamin mit einem Carbonsäureanhydrid und einem Polyphenol oder Aminophenol sowie
C) mindestens ein Epoxidharz enthalten.
Dabei können die Komponenten A), B) und C) jeweils auch Gemische von Verbindungen der angegebenen Art sein. Vorzugsweise werden die Komponenten A) und B) in separaten Reaktionen mit einem großen stöchiometrischen Überschuß an Epoxidharzen umgesetzt und anschließend ggf. mit weiteren Epoxidharzen, thermisch aktivierbaren Härtern und/oder weiteren Zusätzen gemischt.

Beispiele für die Copolymeren der Aufbaukomponente A) sind 1,3-Dienpolymere mit Carboxylgruppen und weiteren polaren ethylenisch ungesättigten Comonomeren. Als Dien kann dabei Butadien, Isopren oder Chloropren eingesetzt werden, bevorzugt ist Butadien. Beispiele für polare, ethylenisch ungesättigte Comonomere sind Acrylsäure, Methacrylsäure, niedere Alkylester der Acryl- oder Methacrylsäure, beispielsweise deren Methyl- oder Ethylester, Amide der Acryl- oder Methacrylsäure, Fumarsäure, Itakonsäure, Maleinsäure oder deren niedrere Alkylester oder Halbester, oder Maleinsäure- oder Itakonsäureanhydrid, Vinylester wie beispielsweise Vinylacetat oder insbesondere Acrylnitril oder Methacrylnitril. Ganz besonders bevorzugte Copolymere A) sind Carboxyl-terminierte Butadienacrylnitrilcopolymere (CTBN), die in flüssiger Form unter dem Handelsnamen Hycar von der Firma B. F. Goodrich angeboten werden. Diese haben Molekulargewichte zwischen 2000 und 5000 und Acrylnitrilgehalte zwischen 10 % und 30 %. Konkrete Beispiele sind Hycar CTBN 1300 X 8, 1300 X 13 oder 1300 X 15.

Weiterhin können als Aufbaukomponente A) auch die aus der US-A-5 290 857 bzw. aus der US-A-5 686 509 bekannten Kern/Schale-Polymeren eingesetzt werden. Dabei sollen die Kernmonomeren eine Glasübergangstemperatur von kleiner oder gleich -30°C haben, diese Monomeren können ausgewählt werden aus der Gruppe der vorgenannten Dienmonomeren oder geeigneten Acrylat- oder Methacrylatmonomeren, ggf. kann das Kernpolymer in geringer Menge vernetzende Comonomereinheiten enthalten. Die Schale ist dabei aus Copolymeren aufgebaut, die eine Glasübergangstemperatur von mindestens 60 °C hat. Die Schale ist vorzugsweise aus niederen Alkylacrylat oder Methacrylat-Monomereinheiten (Methyl- bzw. Ethylester) sowie polaren Monomeren wie (Meth)acrylnitril, (Meth)acrylamid, Styrol oder radikalisch polymerisierbaren ungesättigten Carbonsäuren oder Carbonsäureanhydriden.

Besonders bevorzugt für die Aufbaukomponente A) sind jedoch die Addukte aus Epoxidharzen und den vorgenannten flüssigen CTBN-Kautschuken.

Die Komponente B) kann durch die nachfolgende Formel I dargestellt werden,

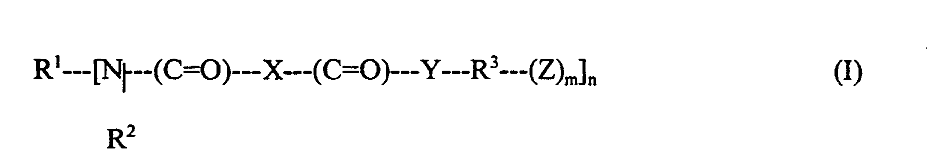

Dabei bedeuten
m = 1 oder 2,
n = 2 oder 3,
R¹ ein aminoterminierter Rest eines Polyalkylenglykols nach dem Entfernen der funktionellen Gruppen,
R² = H, C₁- bis C₆-Alkyl, -Aryl oder -(C=O)-, wobei für R² = -(C=O)- die beiden Carbonylgruppen, der Stickstoff und X einen fünfgliedrigen cyclischen Imidring bilden,
X = C₂- bis C₆-Alkyl oder Rest eines aromatischen Carbonsäureanhydrids oder -dianhydrids nach dem Entfernen der cyclischen Anhydridgruppe(n),
Y = -O-, -S- oder -NR⁴-, wobei R⁴ = H oder C₁- bis C₄-Alkyl oder Phenyl,
R³ = ein carbocyclisch-aromatischer oder araliphatischer m + 1 wertiger Rest mit direkt an den aromatischen Ring gebundenen Gruppen Z und Z = O, H oder-NHR⁴.

Dabei ist die Komponente B) ein Reaktionsprodukt aus einem Di- oder Polyamin und einem Carbonsäureanhydrid, wobei das stöchiometrische Verhältnis so gewählt wird, daß das Carbonsäureanhydrid in vorzugsweise doppeltem Überschuß gegenüber den Aminogruppen ist, anschließend werden die verbleibenden Carbonsäureanhydridgruppen oder Carbonsäuregruppen mit einem Polyphenol oder Aminophenol in stöchiometrischem Überschuß so umgesetzt, daß das Kondensationsprodukt phenolische oder Amino-Endgruppen trägt. Dieses Kondensationsprodukt wird in der Regel direkt in die erfindungsgemäßen Zusammensetzungen eingemischt, es kann jedoch auch mit einem großen stöchiometrischen Überschuß an Epoxidharzen so umgesetzt werden, daß ein Kondensationsprodukt mit terminalen Epoxidgruppen entsteht.

Für die Kondensation können aminoterminierte Polyalkylenglycole, insbesondere di- oder trifunktionelle aminoterminierte Polypropylenglykole, Polyethylenglykole oder Copolymere von Propylenglykol und Ethylenglykol verwendet werden. Diese sind auch unter dem Namen "Jeffamin" (Handelsname der Firma Huntsman) bekannt. Weiterhin besonders geeignet sind die aminoterminierten Polyoxytetramethylenglykole, auch Poly-THF genannt. Außerdem sind aminoterminierte Polybutadiene als Aufbaukomponenten geeignet. Die aminoterminierten Polyalkylenglycole haben Molekulargewichte zwischen 400 und 5000.

Beispiele für geeignete Carbonsäureanhydride sind Maleinsäure-, Bernsteinsäure-, Glutarsäure-, Adipinsäure-, Pimelinsäure-, Korksäure-, Azelainsäure- oder Sebacinsäureanhydrid oder insbesondere Anhydride oder Dianhydride von aromatischen Carbonsäuren oder deren Hydrierungsprodukte wie Phthalsäure-, Benzoltricarbonsäureanhydrid, Tetrahydrophthalsäure-, Mellophansäure-, Pyromelitsäure-, 1,8:4,5- bzw. 2,3:6,7-Naphthalintetracarbonsäure-, Perylen-dianhydrid, Biphenyltetracarbonsäure-, Diphenylethertetracarbonsäure-, Diphenylmethantetracarbonsäure-, 2,2-Diphenylpropantetracarbonsäure- oder Benzophenontetracarbonsäure-dianhydrid sowie deren Mischungen.

Neben den vorgenannten Carbonsäureanhydriden können auch maleinisierte Öle und Fette als Anhydridkomponenten für die Herstellung des Kondensationsproduktes B) verwendet werden. Maleinisierte Öle und Fette sowie niedermolekulare Polyene werden bekanntermaßen durch En-Reaktion oder durch frei radikalische Reaktion von Maleinsäureanhydrid mit ungesättigten Verbindungen hergestellt.

Die für das Kondensationsprodukt B) einzusetzenden Polyphenole oder Aminophenole sind entweder aromatische Di- oder Trihydroxyverbindungen, die sich von einem ein- oder mehrkernigen carbocyclisch-aromatischen Rest ableiten oder es sind die entsprechenden Amino-hydroxyverbindungen. Dabei können die aromatischen Ringe entweder kondensiert oder über Brükkenglieder oder über eine kovalente Bindung miteinander verknüpft sein.

Beispiele für die erstgenannten Verbindungen sind Hydrochinon, Resorcin, Brenzkatechin, Isomere des Dihydroxynaphthalins (Isomeren-rein oder Mischung mehrerer Isomerer), Isomere des Dihydroxyanthracens sowie die entsprechenden Amino-hydroxy-verbindungen. Die Polyphenole oder Aminophenole, die sich von carbocyclisch-aromatischen Verbindungen herleiten, deren aromatische Kerne über Brückenglieder verknüpft sind lassen sich durch die allgemeine Formel II darstellen:

Z---AR---B---AR---Z (II)

worin Z die oben definierte Bedeutung hat,
AR steht für einen einkernigen aromatischen Rest, der ggf. durch Alkyl oder Alkenylreste weiter substituiert sein kann.
B steht für das Brückenglied, dieses kann ausgewählt werden aus der Gruppe bestehend aus einer covalenten Bindung, -CR⁵R⁶-, -O-, -S-, -SO₂-, -CO-, -COO-, -CONR⁷- und SiR⁸R⁹-. Dabei bedeuten R⁵, R⁶ und R⁷ unabhängig voneinander Wasserstoff, -CF₃ oder C₁-C₆-Alkyl oder R⁵ und R⁶ bilden zusammen mit dem gemeinsamen C-Atom einen cycloaliphatischen Rest mit 5 bis 7 Ring C-Atomen, R⁸ und R⁹ bedeuten C₁-C₆-Alkyl. Dabei können die beiden Gruppierungen B und Z in der Formel II unabhängig voneinander in ortho-, meta- oder para-Stellung angeordnet sein. Besonders bevorzugte Verbindungen der Formel II sind 4,4'-Dihydroxy-diphenyl oder die Bisphenole A und/oder F.

Als Epoxidharze für die Komponente C) bzw. für die Epoxid-Adduktbildung bzw. zur Abmischung der Komponenten A) und B) eignen sich eine Vielzahl von Polyepoxiden, die mindestens 2 1,2-Epoxigruppen pro Molekül haben. Das Epoxid-Äquivalent dieser Polyepoxide kann zwischen 150 und 4000 variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin.

Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglykol, Triethylenglykol, 1,2-Propylenglykol, 1,4-Butylenglykol, Triethylenglykol, 1,5-Pentandiol, 1,6-Hexandiol oder Trimethylolpropan ab.

Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Weitere Epoxide leiten sich von den Epoxidierungsprodukten olefinisch ungesättigter cycloaliphatischer Verbindungen oder von nativen Ölen und Fetten ab.

Ganz besonders bevorzugt werden die Epoxidharze, die sich durch Reaktion von Bisphenol A oder Bisphenol F und Epichlorhydrin ableiten. Dabei werden in der Regel Mischungen aus flüssigen und festen Epoxidharzen eingesetzt, wobei die flüssigen Epoxidharze vorzugsweise auf der Basis des Bisphenols A sind und ein hinreichend niedriges Molekulargewicht aufweisen. Insbesondere für die Adduktbildung der Komponenten A) und B) werden bei Raumtemperatur flüssige Epoxidharze eingesetzt, die in der Regel ein Epoxid-Äquivalentgewicht von 150 bis etwa 220 haben, besonders bevorzugt ist ein Epoxi-Äquivalentgewichtbereich von 182 bis 192.

Die Härte des reaktiven Klebstoffes im erkalteten Zustand, d. h. insbesondere nach dem Auftragen auf das zu fügende Substrat, aber vor der Aushärtung, hängt vom Kondensationsgrad und damit Molekulargewicht insbesondere der Komponente B) ab sowie vom Verhältnis von festem Epoxidharz zu flüssigem Epoxidharz. Je höher der Kondensationsgrad (und damit das Molekulargewicht) des Kondensationsproduktes B) ist und je größer der Anteil an festem Epoxidharz in der Zusammensetzung ist, um so härter ist der erkaltete, semikristalline Klebstoff.

Als thermisch aktivierbare oder latente Härter für das Epoxidharz-Bindemittelsystem aus den Komponenten A), B) und C) können Guanidine, substituierte Guanidine, substituierte Harnstoffe, Melaminharze, Guanamin-Derivate, cyclische tertiäre Amine, aromatische Amine und/oder deren Mischungen eingesetzt werden. Dabei können die Härter sowohl stöchiometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanuguanidin (Dicyandiamid). Als Vertreter für geeignete Guanamin-Derivate seien alkylierte Benzoguanamin-Harze, Benzoguanamin-Harze oder Methoximethylethoxymethylbenzoguanamin genannt. Für die Einkomponenten-hitzehärtenden Schmelzklebstoffe ist selbstverständlich das Auswahlkriterium die niedrige Löslichkeit dieser Stoffe bei Raumtemperatur in dem Harzsystem, so daß hier feste, feinvermahlene Härter den Vorzug haben, insbesondere ist Dicyandiamid geeignet. Damit ist eine gute Lagerstabilität der Zusammensetzung gewährleistet.

Zusätzlich oder anstelle von den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1,1-dimethylhamstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden, diese haben jedoch vielfach eine zu hohe Löslichkeit in dem Klebstoffsystem, so daß hier keine brauchbare Lagerstabilität des einkomponentigen Systems erreicht wird. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C₁ bis C₁₂-Alkylimidazole oder N-Arylimidazole.

In der Regel enthalten die erfindungsgemäßen Klebstoffe weiterhin an sich bekannte Füllstoffe wie zum Beispiel die diversen gemahlenen oder gefällten Kreiden, Ruß, Calcium-Magnesiumcarbonate, Schwerspat sowie insbesondere silicatische Füllstoffe vom Typ des Aluminium-Magnesium-Calcium-Silicats, z. B. Wollastonit, Chlorit.

Weiterhin können die erfindungsgemäßen Klebstoffzusammensetzungen gängige weitere Hilfs- und Zusatzmittel wie z. B. Weichmacher, Reaktivverdünner, Rheologie-Hilfsmittel, Netzmittel, Alterungsschutzmittel, Stabilisatoren und/oder Farbpigmente enthalten.

Die erfindungsgemäßen Klebstoffe lassen sich einerseits als einkomponentige Klebstoffe formulieren, wobei diese sowohl als hochviskose warm applizierbare Klebstoffe formuliert werden können als auch als thermisch härtbare Schmelzklebstoffe. Weiterhin können diese Klebstoffe als einkomponentige vorgelierbare Klebstoffe formuliert werden, im letztgenannten Fall enthalten die Zusammensetzungen entweder feinteilige thermoplastische Pulver wie z. B. Polymethacrylate, Polyvinylbutyral oder andere thermoplastische (Co)polymere oder das Härtungssystem ist so abgestimmt, daß ein zweistufiger Härtungsprozeß stattfindet, wobei der Gelierungsschritt nur eine teilweise Aushärtung des Klebstoffes bewirkt und die Endaushärtung im Fahrzeugbau z. B. in einem der Lackieröfen, vorzugsweise der KTL-Ofen, stattfindet.

Die erfindungsgemäßen Klebstoffzusammensetzungen können auch als zweikomponentige Epoxy-Klebstoffe formuliert werden, bei denen die beiden Reaktionskomponenten erst kurz vor der Applikation miteinander vermischt werden, wobei die Aushärtung dann bei Raumtemperatur oder mäßig erhöhter Temperatur stattfindet. Als zweite Reaktionskomponente können hierbei die für zweikomponentige Epoxy-Klebstoffe an sich bekannten Reaktionskomponenten eingesetzt werden können, beispielsweise Di- oder Polyamine, aminoterminierte Polyalkylenglykole (z. B. Jeffamine, Amino-Poly-THF) oder Polyaminoamide. Weitere Reaktivpartner können mercaptofunktionelle Prepolymere sein wie z. B. die flüssigen Thiokol-Polymere. Grundsätzlich können die erfindungsgemäßen Epoxyzusammensetzungen auch mit Carbonsäureanhydriden als zweiter Reaktionskomponente in zweikomponentigen Klebstofformulierungen ausgehärtet werden.

Neben den eingangs erwähnten Anwendungen können die erfindungsgemäßen Klebstoffzusammensetzungen auch als Vergußmassen in der Elektro- oder Elektronikindustrie, als Die-Attach-Klebstoff in der Elektronik zum Verkleben von Bauteilen auf Leiterplatten eingesetzt werden. Weitere Einsatzmöglichkeiten der erfindungsgemäßen Zusammensetzungen sind Matrix-Materialien für Verbundwerkstoffe wie z. B. faserverstärkte Verbundwerkstoffe.

Ein ganz besonders bevorzugtes Anwendungsfeld der erfindungsgemäßen Klebstoffe sind jedoch strukturelle Verklebungen im Fahrzeugbau.

Je nach Anforderungsprofil an den Klebstoff in bezug auf seine Verarbeitungseigenschaften, die Flexibilität, Schlagschälfestigkeit oder Zugfestigkeit können die Mengenverhältnisse der Einzelkomponenten in verhältnismäßig weiten Grenzen variieren. Typische Bereiche für die wesentlichen Komponenten sind:
- Komponente A): 5-25 Gew.-%, vorzugsweise 10-20 Gew.-%
- Komponente B): 5-30 Gew.-%, vorzugsweise 5-20 Gew.-%
- Komponente C): 10-45 Gew.-%, vorzugsweise 15-30 Gew.-%, wobei sich diese Komponente aus einem oder mehreren flüssigen und/oder festen Epoxidharzen zusammensetzt, wobei sie gegebenenfalls auch niedermolekulare Epoxide als Reaktiwerdünner enthalten kann,
- Füllstoffe: 10-40 Gew.-%,
- Härterkomponente (für thermisch härtbare Einkomponentensysteme): 1-10 Gew.%, vorzugsweise 3-8 Gew.-%,
- Beschleuniger: 0,01 bis 3 Gew.-%, vorzugsweise 0,1 bis 0,8 Gew.-%,
- Rheologie-Hilfsmittel (Thixotropiermittel): 0,5-5 Gew.-%.

Wie bereits eingangs erwähnt, steigen die Anforderungen an moderne Strukturklebstoffe im Fahrzeugbau ständig weiter an, da immer mehr Bauelemente auch tragender Natur durch Klebeverfahren gefügt werden. Wie bereits in dem Aufsatz von G. Kötting und S. Singh, "Anforderungen an Klebstoffe für Strukturverbindungen im Karosseriebau", Adhesion 1988, Heft 9, Seite 19 bis 26 ausgeführt, müssen die Klebstoffe zum einen praxisrelevante Aspekte der Fertigung erfüllen, hierzu gehören automatisierbare Verarbeitung in kurzen Taktzeiten, Haftung auf geölten Blechen, Haftung auf verschiedenen Blechsorten sowie Kompatibilität mit den Prozeßbedingungen der Lackierstraße (Beständigkeit gegen Wasch- und Phosphatierbäder, härtbar während des Einbrennens der KTL-Grundierung, Beständigkeit gegenüber den nachfolgenden Lackier- und Trockungsoperationen). Darüber hinaus müssen moderne Strukturklebstoffe auch im ausgehärteten Zustand steigende Festigkeits- und Verformungseigenschaften erfüllen. Hierzu gehören die hohe Korrosions- oder Biegesteifigkeit der strukturellen Bauteile sowie die Verformbarkeit bei mechanischer Belastung der Verklebung. Eine möglichst hohe Verformbarkeit der Bauteile gewährleistet einen erheblichen Sicherheitsvorteil bei stoßartiger Belastung (Crash-Verhalten) bei einem Unfall. Dieses Verhalten läßt sich am besten durch die Ermittlung der Schlagarbeit für ausgehärtete Verklebungen ermitteln, hierbei sind sowohl bei hohen Temperaturen bis +90 °C als auch insbesondere bei tiefen Temperaturen bis zu -40 °C ausreichend hohe Werte für die Schlagarbeit bzw. Schlagschälarbeit wünschenswert bzw. erforderlich. Dabei soll zusätzlich eine möglichst hohe Zugscherfestigkeit erzielt werden. Beide Festigkeiten müssen auf einer Vielzahl von Substraten, hauptsächlich geölten Blechen, wie z. B. Karosseriestahlblech, nach den verschiedensten Methoden verzinktes Stahlblech, Blechen aus diversen Aluminiumlegierungen oder auch Magnesiumlegierungen sowie mit organischen Beschichtungen vom Typ "Bonazinc" oder "Granocoat" im Coil-Coating-Verfahren-beschichteten Stahlbleche erzielt werden. Wie in den nachfolgenden Beispielen gezeigt werden wird, erfüllen die erfindungsgemäßen Klebstoffzusammensetzungen diese Anforderungen überraschender Weise in einem sehr hohen Ausmaß.

Die nachfolgenden Beispiele sollen die Erfindung näher erläutern. Bei den Zusammensetzungen sind dabei alle Mengenangaben Gewichtsteile wenn nicht anders angegeben.

### Allgemeine Herstellung für die Komponente A)

Unter Stickstoffatmosphäre und Rühren wurden bei 140 °C ein Carboxyterminiertes Poly(butadien-co-acrylnitril) (Hycar CTBN 1300 X 13) mit einem etwa 10 molaren Überschuß eines flüssigen DGEBA-Epoxidharzes 3 Stunden lang umgesetzt bis zur Konstanz der Reaktion.

### Allgemeine Herstellung für das Kondensationsprodukt B)

1 Mol des Carbonsäureanhydrids bzw. Dicarbonsäureanhydrids wurden in einem rühr- und heizbaren Reaktionskessel unter Stickstoffatomosphäre bei 120 °C bis 160 °C mit 0,4 bis 0,7 Mol eines aminoterminierten Polyalkylenglykols 3 bis 4 Stunden lang zur Reaktion gebracht, wobei das Polyamin vorgelegt wurde und zunächst auf 130°C aufgeheizt wurde. Das so gebildete Addukt wurde mit etwa 1,1 bis 1,5 Mol eines Polyphenols umgesetzt bis zur Reaktionskonstanz. Der Fortschritt der Reaktion wurde mittels Gelpermeationschromatographie (GPC) verfolgt. Dieses phenolterminierte Polymer wurde dann mit einem Epoxidharz, vorzugsweise einem Diglycidylether des Bisphenols A (DGBEA) gemischt.

### Allgemeine Herstellung des Klebstoffs

In einem Kneter wurden bei Raumtemperatur oder ggf. bei 80 °C die Komponenten A), B) sowie ein flüssiges Epoxidharz und ein festes Epoxidharz unter Zugabe der Füllstoffe, Härter, Beschleuniger und Rheologiehilfsmittel bis zur Homogenität gemischt und anschließend ggf. in noch warmem Zustand in die Lagerbehälter abgefüllt.

### Beispiele 1 bis 6

Gemäß der allgemeinen Herstellung für das Kondensationsprodukt B) wurden aus Jeffamine-D-2000 (Polyoxy propylendiamin, Molekulargewicht 2000) Pyromellitsäuredianhydrid und Resorcin die in Tabelle 1 aufgeführten Kondensationsprodukte B) hergestellt.

**Tabelle 1**

| **Beispiel** | **1** | **2** | **3** | **4** | **5** | **6** |
|---|---|---|---|---|---|---|
| D-2000 | 219,0 | 229,5 | 222,0 | 235,5 | 237,6 | 200,0 |
| PMSA | 48,0 | 42,0 | 48,0 | 41,4 | 36,9 | 31,3 |
| Resorcin | 33,0 | 28,5 | 30,0 | 31,2 | 25,5 | 18,7 |
| D-2000 = Jeffamine D-2000 | | | | | | |
| PMSA = Pyromellitsäuredianhydrid | | | | | | |

Die Komponente A) wurde nach dem oben angegebenen Verfahren aus Hycar CTBN 1300 X13 und einem flüssigen DGEBA-Harz hergestellt. Es resultierte eine Zusammensetzung mit 40 % Butylkautschuk und einem Epoxyäquivalentgewicht von 900, Viskosität bei 80°C 200 Pa.s.

### Beispiele 7 bis 12

Aus den Komponenten B) gemäß Beispiel 1 bis 6, der Komponente A) sowie einem flüssigen DGEBA-Harz (Epoxyäquivalentgewicht 189), Füllstoffen, Dicyandiamid als Härter sowie Beschleunigern und hydrophober Kieselsäure als Thixottopiermittel wurden erfindungsgemäße Klebstoffzusammensetzungen hergestellt. Die Zusammensetzungen sind in der Tabelle 2 zusammengefaßt.

**Tabelle 2**

| Erfindungsgemäße Klebstoffe | | | | | | |
|---|---|---|---|---|---|---|
| **Beispiel** | **7** | **8** | **9** | **10** | **11** | **12** |
| Komponente B) aus Beispiel 1 | 13,5 | | | | | |
| Komponente B) aus Beispiel 2 | | 13,5 | | | | |
| Komponente B) aus Beispiel 3 | | | 13,5 | | | |
| Komponente B) aus Beispiel 4 | | | | 13,5 | | |
| Komponente B) aus Beispiel 5 | | | | | 13,5 | |
| Komponente B) aus Beispiel 6 | | | | | | 13,5 |
| Komponente A) | 17,0 | 17,0 | 17,0 | 17,0 | 17,0 | 17,0 |
| DGEBA-Harz flüssig | 28,0 | 28,0 | 28,0 | 28,0 | 28,0 | 28,0 |
| Wollastonit | 33,7 | 33,7 | 33,7 | 33,7 | 33,7 | 33,7 |
| Dicyandiamid | 4,5 | 4,5 | 4,5 | 4,5 | 4,5 | 4,5 |
| Fenuron | 0,3 | 0,3 | 0,3 | 0,3 | 0,3 | 0,3 |
| Kieselsäure, hydrophob | 3,0 | 3,0 | 3,0 | 3,0 | 3,0 | 3,0 |
| | | | | | | |
| Wollastonit Füllstoff | | | | | | |
| Kieselsäure: Cabosil TS 720 | | | | | | |

In der Tabelle 3 sind die klebetechnischen Eigenschaften der erfindungsgemäßen Beispiele und die klebetechnischen Eigenschaften von Klebstoffen gemäß Stand der Technik gegenübergestellt. Bei dem Klebstoff des Vergleichsversuchs 1 handelte es sich um Terokal 5051 der Firma Henkel Teroson, dieser Klebstoff wurde auf der Basis der Lehre der EP-A-0 354 498 hergestellt. Bei dem Klebstoff des Vergleichsversuches 2 handelt es sich um Betamate 1044/3 der Firma Gurit Essex. Es wird angenommen, daß dieser Klebstoff auf der Basis der Lehre der EP-A-0 308 664 hergestellt wurde.

**Tabelle 3**

| Klebetechnische Eigenschaften | | | | | | | | |
|---|---|---|---|---|---|---|---|---|
| **Beispiel** | **7** | **8** | **9** | **10** | **11** | **12** | **Vergleich 1** | **Vergleich 2** |
| Impact-40°C[J] | 8,7 | 11,7 | 9,4 | 13,1 | 6,7 | 0,7 | 0,5 | 3,3 |
| Impact -20°C [J] | 12,7 | 14,7 | 13,4 | 16,2 | 10,5 | 1,9 | 0,4 | 2,6 |
| Impact 0°c [J] | 13,2 | 13,6 | 15,0 | 16,8 | 12,1 | 3,9 | 0,9 | 4,4 |
| impact RT [J] | 15,5 | 14,7 | 16,1 | 16,0 | 12,9 | 5,0 | 2,1 | 5,2 |
| ZSF -40°C [Mpa] | 34,1 scf | 31,1 scf | 25,2 scf | 30,9 cf | 28,4 cf | 37,8; | 19,8 cf | 20,2 cf |
| | | | | | | 80%cf | | |
| ZSF RT [Mpa] | 25,7 cf | 22,7 cf | 21,6 cf | 22,5 cf | 18,7 cf | 16,4; | 21,8 cf | 21,6 cf |
| | | | | | | 80%cf | | |
| ZSF+90°C [Mpa] | 14,8 c | 11,9 cf | 11,4 cf | 12,0 cf | 11,0 cf | 12,4 cf | 10,9 cf | 11,1 cf |
| 500h SST | 20,3 c | 17,0 cf | 17,0 cf | 18,9 cf | 17,0 cf | n.a. | 19.3 cf | 18,8 cf |
| 1000h SST | 19,1 c | 17,9 cf | 14,5 cf | 18,2 cf | 16,6 cf | n.a. | 17,5 cf | 16,7 cf |
| Impact: Schlagschältest nach ISO 11343 bei 2 m/sec | | | | | | | | |
| RT: Raumtemperatur | | | | | | | | |
| ZSF: Zugscherfestigkeit nach DIN 53283 | | | | | | | | |
| SST: Salzsprühtest nach DIN 50021 | | | | | | | | |
| Cf: kohäsives Bruchbild 100%, wenn nicht anders angegeben | | | | | | | | |
| Scf: kohäsives Bruchbild mit teilweisem Filmrückstand auf einem Substrat | | | | | | | | |

Wie aus diesen Versuchsergebnissen ersichtlich ist, ist die Schlagschälarbeit gemäß ISO 11343 bei den erfindungsgemäßen Klebstoffen um ein Mehrfaches höher als bei den Klebstoffen gemäß Stand der Technik. Insbesondere bei sehr tiefen Temperaturen ist die Schlagschälarbeit der erfindungsgemäßen Klebstoffe deutlich besser als bei denen des Standes der Technik, ohne daß die Zugscherfestigkeit oder das Alterungsverhalten im Salzsprühtest darunter leidet.

## Patentansprüche

1. Zusammensetzung, herstellbar durch Umsetzung eines Carbonsäureanhydrids oder Carbonsäuredianhydrids mit einem Di- oder Polyamin und einem Polyphenol oder Aminophenol, **dadurch gekennzeichnet, dass** das Di- oder Polyamin ausgewählt wird aus aminoterminierten Polyalkylenglycolen, insbesondere di- oder trifunktionellen aminoterminierten Polypropylenglykolen, Polyethylenglykolen oder Copolymeren von Propylenglykol und Ethylenglykol, aminoterminierten Polyoxytetramethylenglykolen oder aminoterminierte Polybutadienen, wobei das stöchiometrische Verhältnis so gewählt wird, daß das Carbonsäureanhydrid in vorzugsweise doppeltem Oberschuß gegenüber den Aminogruppen ist und anschließend die verbleibenden Carbonsäureanhydridgruppen oder Carbonsäuregruppen mit einem Polyphenol oder Aminophenol In stöchiometrischem Überschuß so umgesetzt werden, daß das Kondensationsprodukt phenolische oder Amino-Endgruppen trägt.

2. Zusammensetzungen enthaltend
A) ein Copolymeres mit mindestens einer Glasübergangstemperatur von - 30°C oder niedriger und gegenüber Epoxiden reaktiven Gruppen,
B) ein Reaktionsprodukt herstellbar durch Umsetzung eines Carbonsäureanhydrids oder -dianhydrids mit einem Di- oder Polyamin und einem Polyphenol oder Aminophenol gemäß Anspruch 1,
C) mindestens ein Epoxidharz.

3. Zusammensetzungen nach Anspruch 2, **dadurch gekennzeichnet, daß** die Komponente A) ein Copolymeres auf Butadienbasis ist.

4. Zusammensetzungen nach Anspruch 2 oder 3, **dadurch gekennzeichnet, daß** die Komponente A) ein carboxylgruppenhaltiges Copolymeres auf der Basis von Butadien Acrylnitril, Butadien-(Meth)acrylsäureestern, ein Butadien-Acrylnitril-Styrol-Copolymeres oder ein Butadien-(meth)acrylat Styrol-Copolymeres ist.

5. Zusammensetzung nach Anspruch 2, **dadurch gekennzeichnet, daß** die Komponente A) ein Kern-Schale-Polymer ist, dessen Kempolymer ein Dien-Potymer oder ein (Meth)-acrylat-Polymer mit einer Glasübergangstemperatur von - 30°C oder niedriger und das gegebenenfalls mit 0,01 bis 5 Gew.% eines diolefinischen Comonomers vernetzt sein kann und dessen Schalenpolymer eine Glasübergangstemperatur von 60°C oder höher hat und das aus Monomeren aus der Gruppe Alkyl(meth)acrylat, (Meth)acrylnitril, (Methyl)-Styrol und olefinisch ungesättigten Carbonsäuren oder Carbonsäureanhydriden oder deren Mischungen aufgebaut ist.

6. Zusammensetzungen nach mindestens einem der vorhergehenden Ansprüche, **dadurch gekennzeichnet, daß** als Komponente A) ein Addukt aus einem Epoxidharz und einem Copolymer gemäß Anspruch 2 bis 5 eingesetzt wird.

7. Zusammensetzung nach mindestens einem der vorhergehenden Ansprüche, **dadurch gekennzeichnet, daß** die Komponente B) aus
a) einem Carbonsäureanhydrid ausgewählt aus Maleinsäure-, Bemsteinsäure-, Glutarsäure-, Adipinsäure-, Pimelinsäure-, Korksäure-, Azelainsäure- oder Sebacinsäureanhydrid oder Phthalsäure-, Benzoltricarbonsäureanhydrid, Mellophansäure-, Pyromellitsäure-, 1,8:4,5- bzw. 2,3:6,7-Naphthalintetracarbonsäure-, Perylendianhydrid, Biphenyltetracarbonsäure-, Diphenylethertetracarbonsäure-, Diphenylmethanetracarbonsäure-, 2,2-Diphenylpropantetracarbonsäure-, Benzophenontetracarbonsäure-dianhydrid oder deren Mischungen und
b) einem Polyamin ausgewählt aus Polyethylenglycol-, Polypropylenglycol-. Polyoxytetramethylen- oder Polybutadien- Di- oder Triamin mit einem Molekulargewicht zwischen 400 und 5000 und
c) einem Polyphenol oder Aminophenol
durch Kondensationsreaktion hergestellt wurde.

8. Zusammensetzung nach Anspruch 2 bis 7, **dadurch gekennzeichnet, daß** die Komponente B) nach Anspruch 7 in einem flüssigen Polyepoxid gelöst wurde.

9. Zusammensetzung nach Anspruch 1 bis 5, **dadurch gekennzeichnet, daß** die Komponente B) nach Anspruch 7 mit einem stöchiometrischen Überschuß eines Polyepoxids umgesetzt wurde.

10. Zusammensetzung nach mindestens einem der vorhergehenden Anspruche, **dadurch gekennzeichnet, daß** sie zusätzlich zu den Komponenten A), B) und C)
D) einen latenten Härter aus der Gruppe Dicyandiamid, Guanamine, Guanidine, Aminoguanidine, feste aromatische Diamine und/oder einen Härtungsbeschleuniger sowie
E) gegebenenfalls Weichmacher, Reaktionsverdünner, Rheologie-Hilfsmittel, Füllstoffe, Netzmittel und/oder Alterungsschutzmittel und/oder Stabilisatoren enthält.

11. Verfahren zum Härten der Komponenten A), B), C), D) und gegebenenfalls E) gemäß Anspruch 10 durch Erwärmen der Zusammensetzung auf Temperaturen zwischen 80°C und 210°C; vorzugsweise 120°C bis 180°C.

12. Verwendung der Zusammensetzungen gemäß Anspruch 10 als hochfester, schlagfester Strukturklebstoff im Fahrzeugbau, Flugzeugbau oder Schienenfahrzeugbau.

13. Verwendung der Zusammensetzungen gemäß Anspruch 10 zur Herstellung von Verbundwerkstoffen, als Vergußmassen in der Elektro- bzw. Elektronikindustrie sowie als Die-Attach-Klebstoff bei der Herstellung von Leiterplatten in der Elektronikindustrie.

14. Verfahren zum Verkleben von metallischen und/oder Verbundwerkstoffen **gekennzeichnet durch** die folgenden wesendichen Verfahrensschritte
• Aufbringen der Klebstoffzusammensetzung gemäß Anspruch 10 auf mindestens eine der zu fügenden Substratoberflächen gegebenenfalls nach vorheriger Reinigung und/oder Oberflächenbehandlung
• Fügen der Bauteile
• gegebenenfalls Vorgelieren der Klebstoffzusammensetzung
• Aushärten der Verklebung **durch** Erwärmen der Bauteile auf Temperaturen zwischen 80°C und 210°C, vorzugsweise zwischen 120°C und 180°C.

## Claims

1. A composition obtainable by reacting a carboxylic anhydride or carboxylic dianhydride with a diamine or polyamine and a polyphenol or aminophenol, **characterized in that** the diamine or polyamine is selected from amino-terminated polyalkylene glycols, more particularly from di- or trifunctional amino-terminated polypropylene glycols, polyethylene glycols or copolymers of propylene glycol and ethylene glycol, amino-terminated polyoxytetramethylene glycols or amino-terminated polybutadienes, whereby the stoichiometric ratio is selected so that the carboxylic anhydride is preferably in a two-fold excess over the amino groups, after which the remaining carboxylic anhydride groups or carboxylic acid groups are reacted with a polyphenol or aminophenol in a stoichiometric excess so that the condensation product bears terminal phenolic or amino groups.

2. Compositions containing
A) a copolymer having at least one glass transition temperature of -30°C or lower and epoxy-reactive groups,
B) a reaction product obtainable by reacting a carboxylic anhydride or dianhydride with a diamine or polyamine and a polyphenol or aminophenol in accordance with claim 1 and
C) at least one epoxy resin.

3. Compositions as claimed in claim 2, **characterized in that** component A) is a butadiene-based copolymer.

4. Compositions as claimed in claim 2 or 3, **characterized in that** component A) is a carboxyl-containing copolymer based on butadiene/acrylonitrile, butadiene/(meth)acrylates, a butadiene/acrylonitrile/styrene copolymer or a butadiene/(meth)acrylate/styrene copolymer.

5. A composition as claimed in claim 2, **characterized in that** component A) is a core/shell polymer of which the core polymer is a diene polymer or a (meth)acrylate polymer with a glass transition temperature of -30°C or lower and which may optionally be crosslinked with 0.01 to 5% by weight of a diolefinic comonomer and of which the shell polymer has a glass transition temperature of 60°C or higher and is obtained from monomers from the group consisting of alkyl (meth)acrylate, (meth)acrylonitrile, (methyl) styrene and olefinically unsaturated carboxylic acids or carboxylic anhydrides or mixtures thereof.

6. Compositions as claimed in at least one of the preceding claims, **characterized in that** an adduct of an epoxy resin and a copolymer according to claims 2 to 5 is used as component A).

7. A composition as claimed in at least one of the preceding claims, **characterized in that** component b) is prepared by condensation from
a) a carboxylic anhydride selected from maleic, succinic, glutaric, adipic, pimelic, suberic, azelaic or sebacic anhydride or phthalic anhydride, benzenetricarboxylic anhydride, mellophanic dianhydride, pyromellitic dianhydride, 1,8:4,5- and 2,3:6,7-naphthalenetetracarboxylic dianhydride, perylene dianhydride, biphenyl tetracarboxylic dianhydride, diphenylether tetracarboxylic dianhydride, diphenylmethane tetracarboxylic dianhydride, 2,2-diphenylpropane tetracarboxylic dianhydride or benzophenone tetracarboxylic dianhydride and mixtures thereof and
b) a polyamine selected from polyethylene glycol, polypropylene glycol, polyoxytetramethylene or polybutadiene diamine or triamine having a molecular weight between 400 and 5000 and
c) a polyphenol or aminophenol.

8. A composition as claimed in claims 2 to 7, **characterized in that** component B) according to claim 7 is dissolved in a liquid polyepoxide.

9. A composition as claimed in claims 1 to 5, **characterized in that** component B) according to claim 7 is reacted with a stoichiometric excess of a polyepoxide.

10. A composition as claimed in at least one of the preceding claims,
**characterized in that**, in addition to components A), B) and C), it contains
D) a latent hardener from the group consisting of dicyanodiamide, guanamines, guanidines, aminoguanidines, solid aromatic diamines and/or a hardening accelerator and
E) optionally plasticizers, reactive diluents, rheology aids, fillers, wetting agents and/or antiagers and/or stabilizers.

11. A process for hardening components A), B), C), D) and optionally E) according to claim 10 by heating the composition to temperatures of 80°C to 210°C and preferably to temperatures of 120°C to 180°C.

12. The use of the compositions claimed in claim 10 as a high-strength high-impact structural adhesive in vehicle construction, aircraft construction or rail vehicle construction.

13. The use of the compositions claimed in claim 10 for the production of composite materials, as potting compounds in the electrical and electronics industries and as a die-attach adhesive in the production of circuit boards in the electronics industry.

14. A process for bonding metallic and/or composite materials comprising the following key process steps:
• applying the adhesive composition claimed in claim 10 to at least one of the substrate surfaces to be joined, optionally after cleaning and/or surface treatment
• fitting together the parts to be joined
• optionally pregelling the adhesive composition and
• curing the bond by heating the parts to temperatures of 80°C to 210°C and preferably to temperatures of 120°C to 180°C.

## Revendications

1. Composition, que l'on peut préparer par mise en réaction d'un anhydride d'acide carboxylique ou d'un dianhydride d'acide carboxylique avec une diamine ou une polyamine et un polyphénol ou un aminophénol, **caractérisée en ce que** la diamine ou la polyamine est choisie parmi le groupe constitué par des polyalkylèneglycols à terminaison amino, en particulier des polypropylèneglycols difonctionnels ou trifonctionnels à terminaison amino, des polyéthylèneglycols ou des copolymères de propylèneglycol et d'éthylèneglycol, des polyoxytétraméthylèneglycols à terminaison amino ou des polybutadiènes à terminaison amino, le rapport stoechiométrique étant sélectionné de telle sorte que l'anhydride d'acide carboxylique est présent en un excès de préférence double par rapport aux groupes amino, et ensuite par mise en réaction des groupes d'anhydrides d'acides carboxyliques ou des groupes d'acides carboxyliques restants avec un polyphénol ou un aminophénol en un excès stoechiométrique, de telle sorte que le produit de condensation porte des groupes terminaux phénoliques ou amino.

2. Compositions contenant :
A) un copolymère possédant au moins une température de transition vitreuse de -30 °C ou moins et contenant des groupes réactifs vis-à-vis d'époxydes,
B) un produit de réaction que l'on peut préparer par mise en réaction d'un anhydride ou d'un dianhydride d'acide carboxylique avec une diamine ou avec une polyamine et un polyphénol ou un aminophénol conformément à la revendication 1,
C) au moins une résine époxyde.

3. Compositions selon la revendication 2, **caractérisées en ce que** le composant A) est un copolymère à base de butadiène.

4. Compositions selon la revendication 2 ou 3, **caractérisées en ce que** le composant A) est un copolymère contenant des groupes carboxyle, à base de butadiène-acrylonitrile, de butadiène-esters d'acide (méth)acrylique, d'un copolymère de butadiène-acrylonitrile-styrène ou d'un copolymère de butadiène-(méth)acrylate-styrène.

5. Composition selon la revendication 2, **caractérisée en ce que** le composant A) est un polymère du type à noyau-enveloppe, dont le polymère de noyau est un polymère diénique ou un polymère de (méth)acrylate possédant une température de transition vitreuse de -30 °C ou moins et qui peut éventuellement être réticulé avec un comonomère dioléfinique à concurrence de 0,01 à 5 % en poids, et dont le polymère d'enveloppe possède une température de transition vitreuse de 60°C ou plus, et qui est constitué par des monomères choisis parmi le groupe comprenant le (méth)acrylate d'alkyle, le (méth)acrylonitrile, le (méthyl)-styrène et des acides carboxyliques ou des anhydrides d'acides carboxyliques à insaturation oléfinique, ou encore leurs mélanges.

6. Compositions selon au moins une des revendications précédentes, **caractérisées en ce qu'**on met en oeuvre, à titre de composant A), un adduit constitué d'une résine époxyde et d'un copolymère selon les revendications 2 à 5.

7. Composition selon au moins une des revendications précédentes, **caractérisée en ce qu'**on prépare le composant B) à partir de
a) un anhydride d'acide carboxylique choisi parmi le groupe comprenant l'anhydride de l'acide maléique, l'anhydride de l'acide succinique, l'anhydride de l'acide glutarique, l'anhydride de l'acide adipique, l'anhydride de l'acide pimélique, l'anhydride de l'acide subérique, l'anhydride de l'acide azélaïque ou l'anhydride de l'acide sébacique ou l'anhydride de l'acide phtalique, l'anhydride de l'acide benzènetricarboxylique, le dianhydride de l'acide mellophanique, le dianhydride de l'acide pyromellitique, le dianhydride de l'acide 1,8:4,5-respectivement 2,3:6,7-naphtalène-tétracarboxylique, le dianhydride de pérylène, le dianhydride de l'acide biphényltétracarboxylique, le dianhydride de l'acide diphényléthertétracarboxylique, le dianhydride de l'acide diphényl-méthanetétracarboxylique, le dianhydride de l'acide 2,2-diphényl-propanetétracarboxylique, le dianhydride de l'acide benzophénonetétracarboxylique, ou encore leurs mélanges, et
b) une polyamine choisie parmi le groupe comprenant la polyéthylèneglycol-, la polypropylèneglycol-, la polyoxytétraméthylène- ou la polybutadiène-diamine ou -triamine, possédant un poids moléculaire entre 400 et 5000, et
c) un polyphénol ou un aminophénol,
via une réaction de condensation.

8. Composition selon les revendications 2 à 7, **caractérisée en ce que** le composant B) selon la revendication 7 est dissous dans un polyépoxyde liquide.

9. Composition selon les revendications 1 à 5, **caractérisée en ce que** le composant B) selon la revendication 7 est mis à réagir avec un excès stoechiométrique d'un polyépoxyde.

10. Composition selon au moins une des revendications précédentes, **caractérisée en ce qu'**elle contient, en plus des composants A), B) et C)
D) un durcisseur latent choisi parmi le groupe comprenant le dicyandiamide, la guanamine, la guanidine, l'aminoguanidine, des diamines aromatiques solides et/ou un accélérateur du durcissement, ainsi que
E) éventuellement des plastifiants, des diluants réactionnels, des adjuvants rhéologiques, des matières de charge, des agents mouillants et/ou des agents de protection contre le vieillissement et/ou des stabilisateurs.

11. Procédé pour le durcissement des composants A), B), C), D) et éventuellement E), selon la revendication 10, par chauffage de la composition à des températures entre 80 °C et 210 °C, de préférence de 120 °C à 180 °C.

12. Utilisation des compositions selon la revendication 10, à titre d'adhésif de structures superrésistant et antichoc dans la construction automobile, la construction aéronautique ou la construction ferroviaire.

13. Utilisation des compositions selon la revendication 10, pour la préparation de matériaux composites, à titre de matières de scellement dans l'industrie électrique, respectivement dans l'industrie électronique, et sous forme d'adhésif de type « die-attach » dans la fabrication de plaquettes de circuits imprimés dans l'industrie électronique.

14. Procédé pour le collage de matériaux métalliques et/ou de matériaux composites, **caractérisé par** les étapes opératoires essentielles ci-après :
• l'application de la composition d'adhésif selon la revendication 10 sur au moins une des surfaces de substrat à joindre, éventuellement après un nettoyage préalable et/ou un traitement superficiel préalable
• le jointement des éléments de construction
• le cas échéant, la gélification préalable de la composition d'adhésif
• le durcissement du collage par chauffage des éléments de construction à des températures entre 80°C et 210°C, de préférence entre 120°C et 180°C.
